# EUROPÄISCHE PATENTSCHRIFT

(11) **EP 4 334 905 B1**
(45) Veröffentlichungstag und Bekanntmachung des Hinweises auf die Patenterteilung: **06.08.2025**
(21) Anmeldenummer: 22719773.8
(22) Anmeldetag: 26.04.2022
(51) Int. Cl.: G06V 10/25, G06V 20/59, G06V 40/18, G06V 10/94

(54) **COMPUTERIMPLEMENTIERTES VERFAHREN ZUR ERSTELLUNG EINER AUFMERKSAMKEITSZONE**
COMPUTER-IMPLEMENTED METHOD FOR GENERATING A ZONE OF ATTENTION
PROCÉDÉ MIS EN OEUVRE PAR ORDINATEUR POUR GÉNÉRER UNE ZONE D'ATTENTION

(30) Priorität: 05.05.2021 AT 503452021
(43) Veröffentlichungstag der Anmeldung: 13.03.2024
(73) Patentinhaber: emotion3D GmbH, 1040 Wien (AT)
(72) Erfinder: HÖDLMOSER, Michael, 4861 Schörfling (AT); LANG, Thomas, 1220 Wien (AT)
(74) Vertreter: Puchberger & Partner Patentanwälte
(86) Internationale Anmeldenummer: PCT/AT2022/060129
(87) Internationale Veröffentlichungsnummer: WO 2022/232854

(56) Entgegenhaltungen:
- PICHITWONG WUDTHIPONG ET AL: "An Eye-Tracker-Based 3D Point-of-Gaze Estimation Method Using Head Movement", IEEE ACCESS, vol. 7, 7 August 2019 (2019-08-07), pages 99086 - 99098, XP011737980, DOI: 10.1109/ACCESS.2019.2929195
- MARDANBEGI DIAKO: "Resolving Target Ambiguity in 3D Gaze Interaction through VOR Depth Estimation", CCS '18: PROCEEDINGS OF THE 2018 ACM SIGSAC CONFERENCE ON COMPUTER AND COMMUNICATIONS SECURITY, ACM PRESS, NEW YORK, NEW YORK, USA, 2 May 2019 (2019-05-02), pages 1 - 12, XP058635525, ISBN: 978-1-4503-6201-6, DOI: 10.1145/3290605.3300842
- VICENTE FRANCISCO ET AL: "Driver Gaze Tracking and Eyes Off the Road Detection System", IEEE TRANSACTIONS ON INTELLIGENT TRANSPORTATION SYSTEMS, IEEE, PISCATAWAY, NJ, USA, vol. 16, no. 4, August 2015 (2015-08-01), pages 2014 - 2027, XP011664673, ISSN: 1524-9050, [retrieved on 20150731], DOI: 10.1109/TITS.2015.2396031
- WANG YAFEI ET AL: "Continuous Driver's Gaze Zone Estimation Using RGB-D Camera", SENSORS, vol. 19, 14 March 2019 (2019-03-14), pages 1 - 22, XP055934103, DOI: 10.3390/s19061287

## Beschreibung

Die Erfindung betrifft ein computerimplementiertes Verfahren zur Erstellung einer geometrischen Aufmerksamkeitszone in einem dreidimensionalen Raum.

Aus dem Stand der Technik ist es bekannt, bildbasierte Verfahren einzusetzen, um die Aufmerksamkeit einer Person zu ermitteln, indem die Blickrichtung der Person analysiert wird. Dazu kann beispielsweise die Kopforientierung, oder auch die Augenstellung aus Fotos oder Videos der Person extrahiert werden. Durch Einordnung der Blickrichtung in vordefinierte Bereiche kann ein Aufmerksamkeitsgrad berechnet werden. Eine derartige Aufmerksamkeitsmodellierung wird vor allem im Automobilbereich, aber auch bei anderen Mensch-Maschinen-Anwendungen eingesetzt. In einem Fahrzeug kann damit festgestellt werden, ob Personen auf den Straßenverkehr achten, oder abgelenkt sind. In Geschäften kann eruiert werden, welche Produkte mehr oder weniger Aufmerksamkeit auf sich ziehen. In der Robotik kann die Blickrichtung einer Person zur Steuerung von Maschinen verwendet werden.

Zur Klassifizierung der Blickrichtung einer Person muss das Blickfeld der Person in Aufmerksamkeitszonen unterteilt werden. Nachdem diese Aufmerksamkeitszonen im dreidimensionalen Raum gültig sein müssen, werden sie üblicherweise mittels Polygonen im dreidimensionalen Raum definiert, umfassen also drei oder mehr definierte Punkte mit x-, y- und z-Koordinaten, die eine Fläche aufspannen. Nach Unterteilung des Blickfelds der Person in derartige Aufmerksamkeitszonen kann jede Blickrichtung der Person einer definierten Aufmerksamkeitszone zugeordnet werden.

Aus dem Stand der Technik sind Verfahren zur Erkennung der Blickrichtung einer Person bekannt. Beispielsweise zeigen die Publikationen Pichitwong Widthipong et al., "An Eye-Tracker-Based 3D Point-of-Gaze Estimation Method Using Head Movement", IEEE ACCESS, Bd. 7, 7. August 2019, Seiten 99086-99098 sowie *Mardanbegi Diako,* "Resolving Target Ambiguity in 3D Gaze Interaction through VOR Depth Estimation", CCS '18: Proceedings of the 2018 ACM SIGSAG Conference on Computer and Communications Security, ACM Press, NY, USA, 2. Mai 2019, Seiten 1 - 12 derartige bekannte Verfahren zur Blickrichtungserkennung.

Ein Problem besteht jedoch darin, dass die Bildaufnahmeeinheit, welche die Blickrichtung der Person analysieren soll, zwangsläufig auf die Person selbst gerichtet sein muss, und somit das Blickfeld der Person nicht selbst aufnehmen kann. Soll das Blickfeld der Person ebenfalls aufgenommen werden, sind zwei oder mehr Bildaufnahmeeinheiten erforderlich.

Wird die Blickrichtung einer Person aus den Aufnahmen der Bildaufnahmeeinheit extrahiert, so ergibt sich außerdem das Problem, dass gleiche Blickrichtungen von unterschiedlichen analysierten Personen nicht zwangsweise bedeuten, dass diese Personen auch auf die gleichen Zonen im Raum blicken. Beispielsweise können Fahrer und Beifahrer in einem Fahrzeug identische Blickrichtungen haben, jedoch aufgrund ihrer unterschiedlichen Sitzpositionen völlig unterschiedliche Bereiche fokussieren.

Deshalb werden im Stand der Technik regelmäßig zusätzliche Sensoren verwendet, welche die Aufmerksamkeitszonen im Blickfeld haben und mit der Bildaufnahmeeinheit, welche die Person aufnehmen, verknüpft werden, sodass ein direkter geometrischer Zusammenhang zwischen der Blickrichtung der Person und den Aufmerksamkeitszonen hergestellt wird. Diese zusätzlichen Sensoren werden beispielsweise neben bzw. hinter der Person installiert, sodass Aufmerksamkeitszonen für jede einzelne Person definiert werden können.

Eine Aufgabe der Erfindung besteht darin, diese aus dem Stand der Technik bekannten Verfahren zu verbessern und insbesondere eine Erstellung von geometrischen Aufmerksamkeitszonen ohne die Verwendung zusätzlicher Sensoren zu ermöglichen.

Diese und andere Aufgaben der Erfindung werden durch ein computerimplementiertes Verfahren sowie eine Vorrichtung gemäß den unabhängigen Ansprüchen gelöst.

Ein erfindungsgemäßes computerimplementiertes Verfahren zur Erstellung mehreren geometrischen Aufmerksamkeitszonen für zumindest eine Person in einem dreidimensionalen Raum verwendet eine einzige im Raum angeordnete Bildaufnahmeeinheit, eine Datenverarbeitungseinheit, eine Datenbank und eine Anzeigeeinheit.

Bei dem dreidimensionalen Raum kann es sich um den Innenraum eines Fahrzeugs handeln; das erfindungsgemäße Verfahren ist jedoch nicht auf Fahrzeuge beschränkt.

Die Bildaufnahmeeinheit, Datenverarbeitungseinheit und die Datenbank können vorzugsweise zur Gänze in einem Fahrzeug angeordnet sein. Es kann jedoch auch vorgesehen sein, dass die Datenverarbeitungseinheit und die Datenbank im Fahrzeug angeordnet sind und über eine Schnittstelle, beispielsweise eine drahtlose Verbindung, mit einem externen Server, beispielsweise einem Server im Internet, kommunizieren, auf dem sich gegebenenfalls eine Datenbank mit vorab hinterlegten und/oder laufend ergänzten Referenzdaten befindet, die zur Verarbeitung der aufgenommenen Daten herangezogen werden.

Bei der Bildaufnahmeeinheit kann es sich um eine Foto- oder Videokamera handeln, die dazu ausgebildet ist, zwei- oder dreidimensionale Fotos oder Videos aufzunehmen. Insbesondere kann es sich um eine ToF (Time-of-Flight) Kamera oder dergleichen handeln. Die Verwendung einer ToF-Kamera erleichtert die robuste Erkennung von Personen und die Extraktion der Blickrichtung. Aber auch eine herkömmliche 2D-Kamera kann in Kombination mit einem vorab gespeicherten 3D-Modell der Person bzw. des Gesichts der Person eine robuste Extraktion der Blickrichtung aus 2D-Einzelbildern ermöglichen. Die Bildaufnahmeeinheit kann vorzugsweise derart in einem Fahrzeug angeordnet sein, dass möglichst der gesamte Innenraum, jedenfalls sämtliche Personen-Sitzplätze, zumindest jedoch die Sitzplätze von Fahrer und Beifahrer im Bildbereich sichtbar ist.

Die Datenverarbeitungseinheit kann als Mikrocontroller oder Mikrocomputer ausgebildet sein und eine zentrale Verarbeitungseinheit (CPU), einen flüchtigen Halbleiterspeicher (RAM), einen nichtflüchtigen Halbleiterspeicher (ROM, SSD-Festplatte), einen magnetischen Speicher (Festplatte) und/oder einen optischen Speicher (CD-ROM) sowie Schnittstelleneinheiten (Ethernet, USB) und dergleichen umfassen. Die Datenbank kann als Softwaremodul in der Datenverarbeitungseinheit, in einem von der Datenverarbeitungseinheit getrennten Computer oder in einem externen Server vorgesehen sein. Die Bestandteile derartiger Datenverarbeitungseinheiten sind dem Fachmann grundsätzlich bekannt.

Ein erfindungsgemäßes Verfahren umfasst zumindest die folgenden Schritte:
Einleitend wird die Person durch die Anzeigeeinheit aufgefordert, die Eckpunkte einer bestimmten Aufmerksamkeitszone durch Kopf- und/oder Augenbewegungen zu fixieren. Bei der Aufmerksamkeitszone kann es sich beispielsweise um Polygone handeln, welche der Position der Windschutzscheibe, des Armaturenbretts, der Seitenscheiben oder der Seitenspiegeln eines Fahrzeugs entsprechen. Es kann sich aber auch um Polygone handeln, welche die Schaufenster eines Geschäfts in einer Einkaufsstraße oder das Anzeigefeld eines technischen Geräts in einem Produktionsbetrieb definieren.

Die Bildaufnahmeeinheit nimmt dann über einen vorbestimmten Zeitraum eine Zahl N aufeinanderfolgender erster Fotos des Raums mit der Person auf und übermittelt diese an die Datenverarbeitungseinheit. Die Zahl N bezeichnet dabei die Zahl der Eckpunkte des die Aufmerksamkeitszone definierenden Polygons. Die Zahl N ist größer oder gleich drei. Vorzugsweise ist N gleich vier im Fall rechteckiger oder trapezförmiger Aufmerksamkeitszonen. Statt der Aufnahme von N aufeinanderfolgenden Fotos kann die Bildaufnahmeeinheit auch ein kurzes Video des Raums aufnehmen. Die Datenverarbeitungseinheit analysiert die ersten Fotos bzw. das Video, detektiert die darin enthaltene Person und ermittelt eine Zahl N erster Blickrichtungsvektoren BV₁ - BV_{N} dieser Person. Die N ersten Blickrichtungsvektoren BV₁ - BV_{N} sind dabei von der Person auf die Eckpunkte der betreffenden Aufmerksamkeitszone gerichtet und beispielsweise als Vektoren in dreidimensionalen kartesischen Koordinaten oder in Polarkoordinaten definiert.

Die Ermittlung der Blickrichtungsvektoren der zumindest einen Person aus den Fotos oder dem Video kann durch Extraktion und Analyse der Kopforientierung und/oder der Augenposition der Person erfolgen. Derartige Verfahren zur Ermittlung der Blickrichtungsvektoren einer Person aus einem Foto oder Video der Person sind grundsätzlich bekannt; es können zu diesem Zweck bekannte Bildverarbeitungsalgorithmen eingesetzt werden. Insbesondere können Bildanalysebibliotheken in der Datenbank und/oder ein mit Trainingsbeispielen trainierter Detektor, beispielsweise ein neuronales Netz herangezogen werden.

Ferner kann vorgesehen sein, dass die Datenverarbeitungseinheit die Blickrichtungsvektoren mehrerer Personen (beispielsweise des Fahrers und des Beifahrers) aus einer einzigen Fotoserie bzw. einem einzigen Video extrahiert.

In Folge gibt die die Anzeigeeinheit eine Aufforderung an die Person zur Änderung ihrer Position im Raum aus. Beispielsweise kann die Person ihren Sitz zurück, vorwärts, nach oben oder nach unten fahren, oder sich nach vorne oder nach hinten lehnen. Danach wird die Person durch die Anzeigeeinheit aufgefordert, neuerlich die Eckpunkte der Aufmerksamkeitszone durch Kopf- und/oder Augenbewegungen zu fixieren.

Im nächsten Schritt nimmt die die Bildaufnahmeeinheit eine Zahl N zweiter Fotos des Raums mit der Person auf und übermittelt die Fotos an die Datenverarbeitungseinheit. Wiederum kann statt der Fotos ein Video über einen kurzen Zeitraum aufgenommen werden.

Die Datenverarbeitungseinheit extrahiert wieder eine Zahl N zweiter dreidimensionaler Blickrichtungsvektoren BV₁' - BV_{N}' der Person. Aufgrund der unterschiedlichen Position der Person unterscheiden sich die zweiten Blickrichtungsvektoren BV₁' - BV_{N}' von den ersten Blickrichtungsvektoren BV₁ - BV_{N}.

Danach überlagert die Datenverarbeitungseinheit die Blickrichtungsvektoren BV₁ - BV_{N} mit den Blickrichtungsvektoren BV₁' - BV_{N}' zur Ermittlung von N dreidimensionalen Schnittpunkten P₁ - P_{N} durch Triangulation. Diese N Schnittpunkte entsprechen den Eckpunkten der Aufmerksamkeitszone in einem gemeinsamen dreidimensionalen Koordinatensystem des Raums. Die N Schnittpunkte P₁ - P_{N} werden als Eckpunkte der Aufmerksamkeitszone in der Datenbank gespeichert.

Das Verfahren kann auch mit mehr als zwei unterschiedlichen Positionen der Person durchgeführt werden, um die Genauigkeit der Triangulation zu erhöhen.

Beispielsweise kann vorgesehen sein, dass die Person zunächst aufgefordert wird, ihren Sitz ganz nach unten zu fahren, danach ihren Sitz ganz nach oben zu fahren, danach ihren Sitz ganz nach vorne zu fahren, und schließlich ihren Sitz ganz nach hinten zu fahren, wobei nach jeder Positionsänderung N Blickrichtungsvektoren ermittelt werden, die danach zur exakten Berechnung der Schnittpunkte P₁ - P_{N} verwendet werden.

Es ergibt sich mit der vorliegenden Erfindung der Vorteil, dass zur Erstellung Konfiguration der Aufmerksamkeitszonen keine zusätzlichen Sensoren oder Bildaufnahmeeinheiten notwendig sind. Es reicht aus, die Bildaufnahmeeinheit zu verwenden, die ohnehin auf die zu analysierende Person gerichtet ist. Eine Aufnahme der Person von hinten ist nicht erforderlich.

Dies erlaubt eine schnelle und flexible Konfiguration der Aufmerksamkeitszonen, wodurch ein schnellerer Umbau bzw. Einbau des Gesamtsystems in ein bestehendes Bildaufnahme- und Bildanalysesystem gewährleistet ist. Es ist keine Installation neuer Hardware erforderlich.

Erfindungsgemäß ist es vorgesehen, dass das Verfahren zur Erstellung mehrerer Aufmerksamkeitszonen einer einzigen Person wiederholt wird. Beispielsweise kann vorgesehen sein, dass die Person nach dem Durchlaufen des erfindungsgemäßen Verfahrens aufgefordert wird, nun die Eckpunkte einer anderen Aufmerksamkeitszone zu fixieren.

Erfindungsgemäß ist es vorgesehen, dass das Verfahren zur Erstellung mehrerer Aufmerksamkeitszonen verschiedener Personen wiederholt wird. Beispielsweise kann vorgesehen sein, dass alle detektierten Personen nach dem Durchlaufen des erfindungsgemäßen Verfahrens aufgefordert werden, nun die Eckpunkte einer anderen Aufmerksamkeitszone zu fixieren.

Erfindungsgemäß kann vorgesehen sein, dass nach der Erstellung und Speicherung mehrerer Aufmerksamkeitszonen zumindest einer Person die Bildaufnahmeeinheit laufend die Blickrichtungsvektoren dieser Person detektiert und an die Datenverarbeitungseinheit übermittelt, und die Datenverarbeitungseinheit laufend prüft, ob die detektierten Blickrichtungsvektoren in eine der gespeicherten Aufmerksamkeitszonen fallen oder nicht. Dadurch wird eine Überwachung der Aufmerksamkeit der Person im laufenden Betrieb erreicht.

Erfindungsgemäß kann vorgesehen sein, dass die Datenverarbeitungseinheit einen Aufmerksamkeitsgrad zumindest einer Person berechnet, indem sie die Häufigkeit bestimmt, mit der die detektierten Blickrichtungsvektoren dieser Person je Zeiteinheit in eine der gespeicherten Aufmerksamkeitszonen fallen. Es kann vorgesehen sein, dass die Anzeigeeinheit eine Warnmeldung ausgibt, wenn der Aufmerksamkeitsgrad unter einen vorgegebenen Schwellwert fällt. Beispielsweise kann ein Schwellwert definiert sein, wonach die Person zumindest einmal pro Sekunde in die durch die Windschutzscheibe definierte Aufmerksamkeitszone blickt.

Die Erfindung betrifft ferner ein computerlesbares Speichermedium, umfassend Anweisungen, die eine Datenverarbeitungseinheit zur Ausführung eines erfindungsgemäßen Verfahrens veranlassen.

Die Erfindung betrifft ferner eine Vorrichtung zur Erstellung einer geometrischen Aufmerksamkeitszone für zumindest eine Person in einem dreidimensionalen Raum, umfassend eine einzige Bildaufnahmeeinheit, eine Datenverarbeitungseinheit, eine Datenbank und eine Anzeigeeinheit, wobei die Vorrichtung zur Ausführung eines erfindungsgemäßen Verfahrens ausgebildet ist.

Erfindungsgemäß kann insbesondere vorgesehen sein, dass der Raum der Innenraum eines Fahrzeugs ist und die Bildaufnahmeeinheit in Fahrtrichtung des Fahrzeugs vor einem Fahrersitz oder vor einem Beifahrersitz und vorzugsweise mittig über einer Windschutzscheibe oder über dem Armaturenbrett des Fahrzeugs angeordnet ist.

Weitere erfindungsgemäße Merkmale ergeben sich aus den Ansprüchen, den Ausführungsbeispielen und den Figuren.

Die Erfindung wird im Folgenden anhand eines exemplarischen, nicht ausschließlichen Ausführungsbeispiels erläutert.
Fig. 1 zeigt eine schematische Darstellung eines Fahrzeugs mit einer Datenverarbeitungseinheit zur Ausführung eines erfindungsgemäßen Verfahrens;
Fig. 2 zeigt schematische Beispiele verschiedener erfindungsgemäßer Aufmerksamkeitszonen in einem Fahrzeug;
Figs. 3a - 3d zeigen schematische Darstellungen des Innenraums eines Fahrzeugs während der Ausführung eines erfindungsgemäßen Verfahrens;
Fig. 3e zeigt eine schematische Darstellung der Bestimmung der Schnittpunkte zweier Blickrichtungsvektoren einer Person.

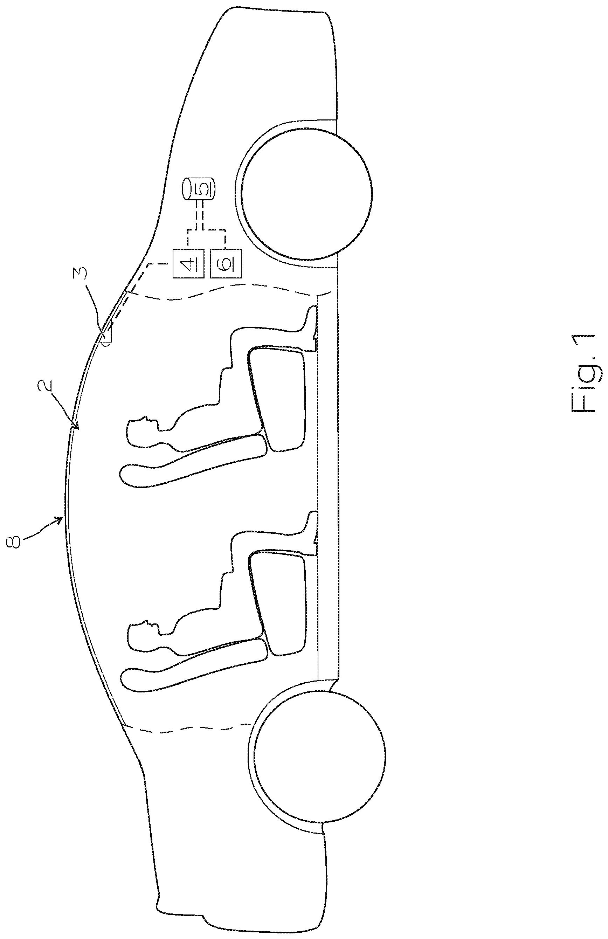

**Fig. 1** zeigt eine schematische Darstellung eines Fahrzeugs 8 mit einer darin integrierten elektronischen Datenverarbeitungseinheit 4 zur Ausführung eines erfindungsgemäßen Verfahrens. Im Innenraum 2 des Fahrzeugs 8 ist an der Decke eine Bildaufnahmeeinheit 3 in Form einer Kamera angeordnet. Die Kamera ist dazu ausgebildet und derart angeordnet, dass sie den Innenraum 2 des Fahrzeugs 8, nämlich zumindest die beiden Vordersitze und darin befindliche Personen, aufnehmen kann. Im Innenraum sitzen mehrere Personen in zwei Reihen. Das Fahrzeug ist in diesem Ausführungsbeispiel als PKW ausgebildet. Die Datenverarbeitungseinheit 4 ist mit einer Datenbank 5 verbunden und verfügt über (nicht dargestellte) Schnittstellen zur Kommunikation mit externen elektronischen Komponenten. Ferner ist eine Anzeigeeinheit 6 vorgesehen, die ebenfalls mit der Datenverarbeitungseinheit 4 verbunden ist. Die Anzeigeeinheit 6 ist im Armaturenbrett des Fahrzeugs 8 angeordnet.

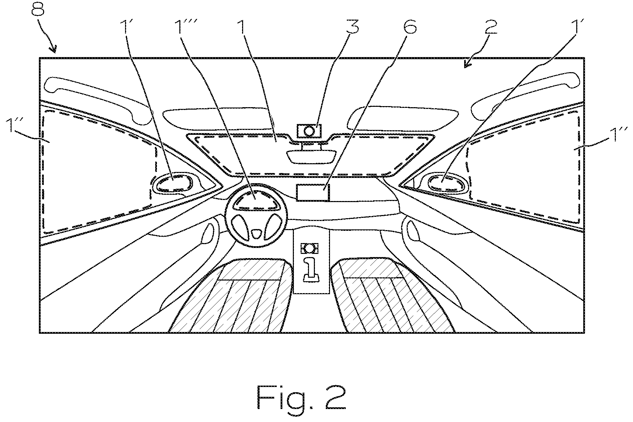

**Fig. 2** zeigt schematische Beispiele verschiedener erfindungsgemäßer Aufmerksamkeitszonen 1, 1', 1", 1‴ im Innenraum 2 eines Fahrzeugs 8.

In diesem Beispiel bildet die Windschutzscheibe die erste Aufmerksamkeitszone 1, die beiden Seitenspiegel die zweiten Aufmerksamkeitszonen 1', die beiden Seitenscheiben die dritten Aufmerksamkeitszonen 1" und das Armaturenbrett die vierte Aufmerksamkeitszone 1‴. Ferner ist die Bildaufnahmeeinheit 3 in Form einer zentral über der Windschutzscheibe angeordneten Videokamera dargestellt. Die Anzeigeeinheit 6 ist als zentral angeordneter Touch-Screen dargestellt.

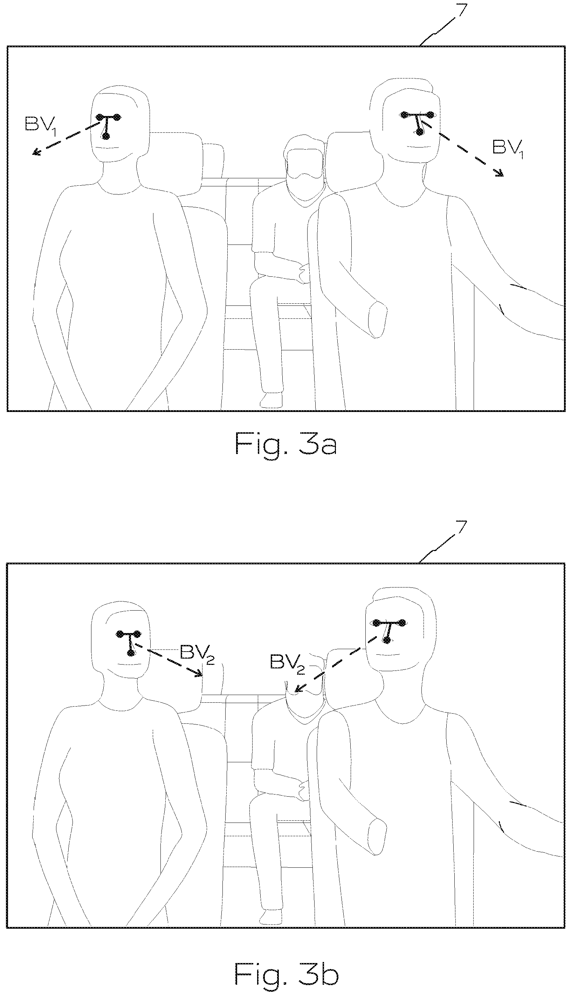

**Figs. 3a - 3d** zeigen schematische Darstellungen des Innenraums eines Fahrzeugs während der Ausführung eines erfindungsgemäßen Verfahrens.

**Fig. 3a** zeigt ein Foto 7 des Innenraums 2 mit drei Personen, wobei die Blickrichtungen des Fahrers und des Beifahrers als Blickrichtungsvektoren BV₁ extrahiert wurden. Die Personen wurden aufgefordert, einen Eckpunkt P₁ einer Aufmerksamkeitszone 1 zu fokussieren. Die Extrahierung der Blickrichtungsvektoren der beiden Personen kann im Wesentlichen gleichzeitig oder separat erfolgen.

**Fig. 3b** zeigt ein weiteres Foto 7 des Innenraums 2, nachdem die Personen aufgefordert wurden, einen weiteren Eckpunkt P₂ der Aufmerksamkeitszone 1 zu fokussieren. Wiederum werden die Blickrichtungsvektoren des Fahrers und des Beifahrers als Blickrichtungsvektoren BV₂ extrahiert. Auch hier kann die Extrahierung gleichzeitig oder separat erfolgen.

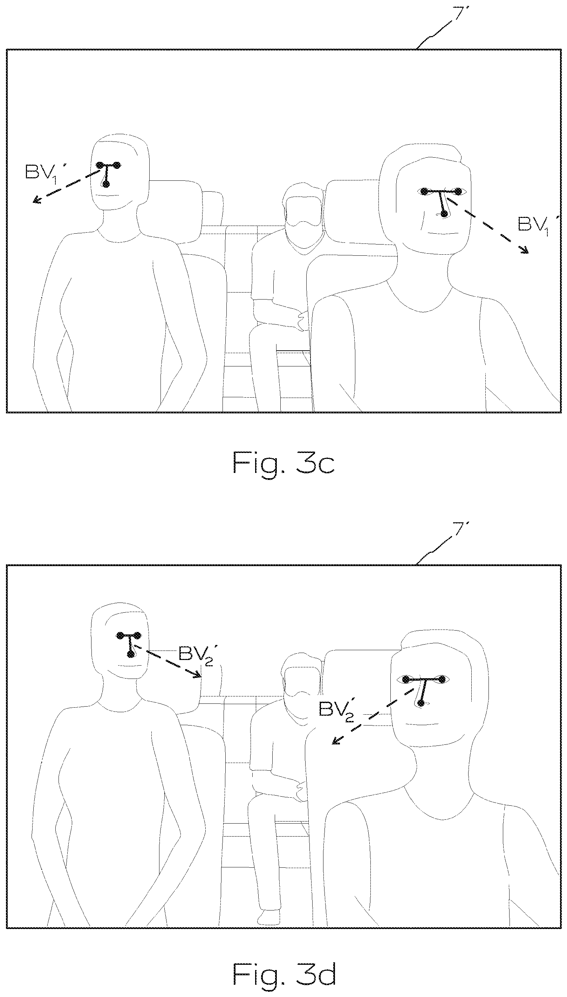

**Fig. 3c** zeigt ein weiteres Foto 7 des Innenraums 2, nachdem die Personen aufgefordert wurden, ihre Position zu verändern und wieder den Eckpunkt P₁ der Aufmerksamkeitszone 1 zu fokussieren. Wiederum werden die Blickrichtungsvektoren des Fahrers und des Beifahrers als Blickrichtungsvektoren BV₁' extrahiert.

**Fig. 3d** zeigt ein weiteres Foto 7 des Innenraums 2, nachdem die Personen aufgefordert wurden, wieder den Eckpunkt P₂ der Aufmerksamkeitszone 1 zu fokussieren. Wiederum werden die Blickrichtungsvektoren des Fahrers und des Beifahrers als Blickrichtungsvektoren BV₂' extrahiert.

Diese Verfahrensschritte werden für sämtliche Eckpunkte der gewünschten polygonalen Aufmerksamkeitszonen wiederholt, bis für jede Aufmerksamkeitszone ausreichend (jedoch zumindest zwei unterschiedliche) Blickrichtungsvektoren jeder Person extrahiert wurden, um eine Triangulierung zur Bestimmung der Position der Punkte P₁ - P_{N} durchführen zu können.

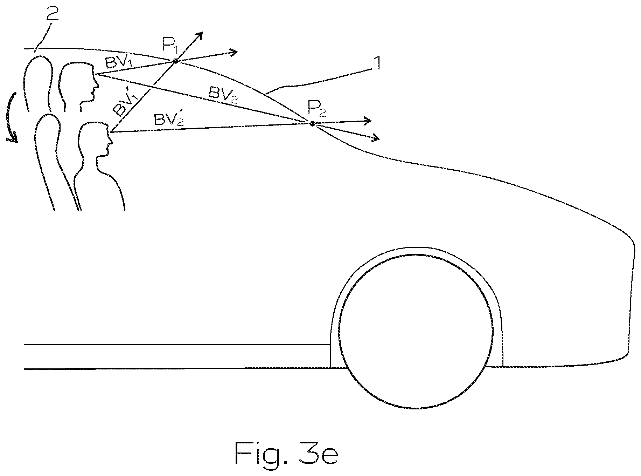

**Fig. 3e** zeigt eine schematische Darstellung der Triangulierung zur Bestimmung der Schnittpunkte zweier Blickrichtungsvektoren einer Person. Angedeutet sind zwei unterschiedliche Sitzpositionen der Person, wobei die Blickrichtungsvektoren BV₁ und BV₂ der ersten Sitzposition, und die Blickrichtungsvektoren BV₁' und BV₂' der zweiten Sitzposition entsprechen.

Durch Überlagerung der Blickrichtungsvektoren BV₁ und BV₁' bzw. BV₂ und BV₂' können die Schnittpunkte P₁ und P₂ bestimmt werden, bei denen es sich hier um Eckpunkte der Aufmerksamkeitszone 1 handelt.

Die Erfindung beschränkt sich nicht auf die beschriebenen Ausführungsbeispiele, sondern umfasst auch weitere Ausführungen der vorliegenden Erfindung im Rahmen der nachfolgenden Patentansprüche.

### Bezugszeichenliste

- 1, 1', 1", 1‴: Aufmerksamkeitszone
- 2: Dreidimensionaler Raum
- 3: Bildaufnahmeeinheit
- 4: Datenverarbeitungseinheit
- 5: Datenbank
- 6: Anzeigeeinheit
- 7: Foto
- 8: Fahrzeug

## Patentansprüche

1. Computerimplementiertes Verfahren zur Erstellung mehrerer geometrischer Aufmerksamkeitszonen (1, 1', 1") für zumindest eine Person in einem dreidimensionalen Raum (2) mit einer einzigen Bildaufnahmeeinheit (3), einer Datenverarbeitungseinheit (4), einer Datenbank (5) und einer Anzeigeeinheit (6), umfassend die folgenden Schritte:
a. Ausgabe, durch die Anzeigeeinheit (6), einer Aufforderung an die Person zur Fixierung von Punkten im Raum (2), die den Eckpunkten der zu erstellenden Aufmerksamkeitszone (1, 1', 1") entsprechen,
b. Aufnahme, durch die Bildaufnahmeeinheit (3), einer Zahl N erster Fotos (7) des Raums (2) mit der Person und Extraktion, durch die Datenverarbeitungseinheit (4), einer Zahl N erster dreidimensionaler Blickrichtungsvektoren BV₁ - BV_{N} der Person, wobei N größer oder gleich eins ist,
c. Ausgabe, durch die Anzeigeeinheit (6), einer Aufforderung an die Person zur Änderung ihrer Position im Raum (2) und zur neuerlichen Fixierung der Eckpunkte der Aufmerksamkeitszone (1, 1', 1"),
d. Aufnahme, durch die Bildaufnahmeeinheit (3), einer Zahl N zweiter Fotos (7') des Raums (2) mit der Person und Extraktion, durch die Datenverarbeitungseinheit (4), einer Zahl N zweiter dreidimensionaler Blickrichtungsvektoren BV₁' - BV_{N}' der Person,
e. Überlagerung, durch die Datenverarbeitungseinheit (4), der Blickrichtungsvektoren BV₁ - BV_{N} mit den Blickrichtungsvektoren BV₁' - BV_{N}' zur Ermittlung von N dreidimensionalen Schnittpunkten P₁ - P_{N},
f. Speicherung, in der Datenbank (5), einer Aufmerksamkeitszone (1, 1', 1") als Polygon im Raum (2) mit den Eckpunkten P₁ - P_{N},
wobei
g. das Verfahren zur Erstellung mehrerer Aufmerksamkeitszonen (1, 1', 1") einer einzigen Person oder verschiedener Personen wiederholt wird, und
h. die Zahl der Eckpunkte N größer oder gleich drei ist.

2. Verfahren nach Anspruch 1, **dadurch gekennzeichnet, dass**, die Zahl der Eckpunkte N gleich vier ist.

3. Verfahren nach Anspruch 1 oder 2, **dadurch gekennzeichnet, dass** der Raum (2) der Innenraum eines Fahrzeugs (8) ist.

4. Verfahren nach einem der Ansprüche 1 bis 3, **dadurch gekennzeichnet, dass**
a. nach der Erstellung und Speicherung einer oder mehrerer Aufmerksamkeitszonen (1, 1', 1") zumindest einer Person die Bildaufnahmeeinheit (3) laufend die Blickrichtungsvektoren dieser Person detektiert und an die Datenverarbeitungseinheit (4) übermittelt, und
b. die Datenverarbeitungseinheit (4) prüft, ob die detektierten Blickrichtungsvektoren in eine der gespeicherten Aufmerksamkeitszonen (1, 1', 1") fallen.

5. Verfahren nach Anspruch 4, **dadurch gekennzeichnet, dass**
a. die Datenverarbeitungseinheit (4) einen Aufmerksamkeitsgrad zumindest einer Person berechnet, indem sie die Häufigkeit bestimmt, mit der die detektierten Blickrichtungsvektoren je Zeiteinheit in eine der gespeicherten Aufmerksamkeitszonen (1, 1', 1") fallen, und
b. die Anzeigeeinheit (6) eine Warnmeldung ausgibt, wenn der Aufmerksamkeitsgrad unter einen vorgegebenen Schwellwert fällt.

6. Computerlesbares Speichermedium, umfassend Anweisungen, die eine Datenverarbeitungseinheit (4) zur Ausführung eines Verfahrens nach einem der Ansprüche 1 bis 5 veranlassen.

7. Vorrichtung zur Erstellung mehrerer geometrischer Aufmerksamkeitszonen (1, 1', 1") für zumindest eine Person in einem dreidimensionalen Raum (2), umfassend eine einzige Bildaufnahmeeinheit (3), eine Datenverarbeitungseinheit (4), eine Datenbank (5) und eine Anzeigeeinheit (6), **dadurch gekennzeichnet, dass** die Vorrichtung zur Ausführung eines Verfahrens nach einem der Ansprüche 1 bis 5 ausgebildet ist.

8. Vorrichtung nach Anspruch 7, **dadurch gekennzeichnet, dass** der Raum (2) der Innenraum eines Fahrzeugs (8) ist und die Bildaufnahmeeinheit (3) in Fahrtrichtung des Fahrzeugs vor einem Fahrersitz oder vor einem Beifahrersitz und vorzugsweise mittig über einer Windschutzscheibe des Fahrzeugs angeordnet ist.

## Claims

1. A computer-implemented method for generating multiple geometric attention zones (1, 1', 1") for at least one person in a three-dimensional space (2) with a single image capturing unit (3), a data processing unit (4), a database (5) and a display unit (6), comprising the following steps:
a. outputting, by the display unit (6), a request to the person to fixate points in the space (2) corresponding to the vertices of the attention zone (1, 1', 1") to be created,
b. capturing, by the image capturing unit (3), a number N of first photographs (7) of the space (2) with the person and extracting, by the data processing unit (4), a number N of first three-dimensional gaze direction vectors BV₁ - BV_{N} of the person, where N is greater than or equal to one,
c. outputting, by the display unit (6), a request to the person to change their position in the space (2) and to re-fixate the vertices of the attention zone (1, 1', 1"),
d. capturing, by the image capturing unit (3), a number N of second photographs (7') of the space (2) with the person and extracting, by the data processing unit (4), a number N of second three-dimensional gaze direction vectors BV₁' - BV_{N}' of the person,
e. superimposing, by the data processing unit (4), the gaze direction vectors BV₁ - BV_{N} with the gaze direction vectors BV₁' - BV_{N}' in order to determine N three-dimensional intersection points P₁ - P_{N},
f. storing, in the database (5), an attention zone (1, 1', 1") as a polygon in the space (2) with the vertices P₁ - P_{N},
wherein
g. the method is repeated to generate multiple attention zones (1, 1', 1") of a single person or of several persons, and
h. the number of vertices N is greater than or equal to three.

2. The method according to claim 1, **characterised in that** the number of vertices N is equal to four.

3. The method according to claim 1 or 2, **characterised in that** the space (2) is the interior of a vehicle (8).

4. The method according to one of claims 1 to 3, **characterised in that**
a. after generating and storing one or multiple attention zones (1, 1', 1") of at least one person, the image capturing unit (3) continuously detects the gaze direction vectors of this person and transmits them to the data processing unit (4), and
b. the data processing unit (4) verifies whether the detected gaze direction vectors fall within one of the stored attention zones (1, 1', 1").

5. The method according to claim 4, **characterised in that**
a. the data processing unit (4) calculates a degree of attention of at least one person by determining the frequency with which the detected gaze direction vectors fall within one of the stored attention zones (1, 1', 1") per unit of time, and
b. the display unit (6) outputs a warning message when the level of attention drops below a predefined threshold.

6. A computer-readable storage medium, comprising commands which cause a data processing unit (4) to execute a method according to one of claims 1 to 5.

7. A device for generating multiple geometric attention zones (1, 1', 1") for at least one person in a three-dimensional space (2), comprising a single image capturing unit (3), a data processing unit (4), a database (5) and a display unit (6), **characterised in that** the device is designed for executing a method according to one of claims 1 to 5.

8. The device according to claim 7, **characterised in that** the space (2) is the interior of a vehicle (8) and the image capturing unit (3) is arranged in front of a driver's seat or in front of a passenger's seat in the direction of travel of the vehicle and preferably centrally above a windscreen of the vehicle.

## Revendications

1. Procédé mis en œuvre par ordinateur pour créer plusieurs zones d'attention géométriques (1, 1', 1") pour au moins une personne dans un espace tridimensionnel (2) avec une seule unité de prise de vue (3), une unité de traitement de données (4), une base de données (5) et une unité d'affichage (6), comprenant les étapes suivantes :
a. émission, par l'unité d'affichage (6), d'une invitation à la personne à fixer des points dans l'espace (2) qui correspondent aux sommets de la zone d'attention (1, 1', 1") à créer,
b. prise, par l'unité de prise de vue (3), d'un nombre N de premières photos (7) de l'espace (2) avec la personne et extraction, par l'unité de traitement de données (4), d'un nombre N de premiers vecteurs de direction de regard tridimensionnels BV₁ - BV_{N} de la personne, N étant supérieur ou égal à un,
c. émission, par l'unité d'affichage (6), d'une demande à la personne de modifier sa position dans l'espace (2) et de fixer à nouveau les sommets de la zone d'attention (1, 1', 1"),
d. prise, par l'unité de prise de vue (3), d'un nombre N de secondes photos (7') de l'espace (2) contenant la personne et extraction, par l'unité de traitement de données (4), d'un nombre N de seconds vecteurs de direction de regard tridimensionnels BV₁' - BV_{N}' de la personne,
e. superposition, par l'unité de traitement de données (4), des vecteurs de direction de regard BV₁ - BV_{N} avec les vecteurs de direction de regard BV₁' - BV_{N}' pour déterminer N points d'intersection tridimensionnels P₁ - P_{N},
f. enregistrement, dans la base de données (5), d'une zone d'attention (1, 1', 1") sous la forme d'un polygone dans l'espace (2) avec les angles P₁ - P_{N}, dans lequel
g. Le procédé est répété pour créer plusieurs zones d'attention (1, 1', 1") d'une seule personne ou de différentes personnes, et
h. Le nombre de sommets N est supérieur ou égal à trois.

2. Procédé selon la revendication 1, **caractérisé en ce que** le nombre de sommets N est égal à quatre.

3. Procédé selon la revendication 1 ou 2, **caractérisé en ce que** l'espace (2) est l'habitacle d'un véhicule (8).

4. Procédé selon l'une des revendications 1 à 3, **caractérisé en ce**
a. **qu'**après la création et la mémorisation d'une ou plusieurs zones d'attention (1, 1', 1") d'au moins une personne, l'unité de prise de vue (3) détecte en continu les vecteurs de direction du regard de cette personne et les transmet à l'unité de traitement de données (4), et
b. l'unité de traitement de données (4) vérifie si les vecteurs de direction du regard détectés tombent dans l'une des zones d'attention (1, 1', 1") mémorisées.

5. Procédé selon la revendication 4, **caractérisé en ce que**
a. l'unité de traitement de données (4) calcule un degré d'attention d'au moins une personne en déterminant la fréquence à laquelle les vecteurs de direction du regard détectés tombent par unité de temps dans l'une des zones d'attention (1, 1', 1") mémorisées, et
b. l'unité d'affichage (6) émet un message d'avertissement lorsque le degré d'attention tombe en dessous d'une valeur seuil prédéterminée.

6. Support de stockage lisible par ordinateur, comprenant des instructions amenant une unité de traitement de données (4) à mettre en œuvre un procédé selon l'une des revendications 1 à 5.

7. Dispositif de création de plusieurs zones géométriques d'attention (1, 1', 1") d'au moins une personne dans un espace tridimensionnel (2), comprenant une seule unité de prise de vue (3), une unité de traitement de données (4), une base de données (5) et une unité d'affichage (6), **caractérisé en ce que** le dispositif est conçu pour mettre en œuvre un procédé selon l'une des revendications 1 à 5.

8. Dispositif selon la revendication 7, **caractérisé en ce que** l'espace (2) est l'habitacle d'un véhicule (8) et l'unité de prise de vue (3) est disposée, dans le sens de la marche du véhicule, devant un siège conducteur ou devant un siège passager et, de préférence, au centre au-dessus d'un pare-brise du véhicule.
